Europäisches Patentamt

European Patent Office

Office européen des brevets

(11) Veröffentlichungsnummer: **0 321 441**
**A1**

## (12) EUROPÄISCHE PATENTANMELDUNG

(21) Anmeldenummer: **88890311.9**

(22) Anmeldetag: **06.12.88**

(51) Int. Cl.⁴: **F 24 J 2/04**
**E 04 D 13/18**

(30) Priorität: **15.12.87 AT 3300/87**

(43) Veröffentlichungstag der Anmeldung:
**21.06.89 Patentblatt 89/25**

(84) Benannte Vertragsstaaten:
**BE CH DE ES FR GB GR IT LI NL SE**

(71) Anmelder: **Vanovsek, Wolfgang, Dipl.-Ing. Dr.mont.**
**Turmgasse 3a**
**A-8700 Leoben (AT)**

(72) Erfinder: **Vanovsek, Wolfgang, Dipl.-Ing. Dr.mont.**
**Turmgasse 3a**
**A-8700 Leoben (AT)**

(74) Vertreter: **Hübscher, Gerhard, Dipl.-Ing. et al**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz (AT)**

(54) **Sonnenkollektor.**

(57) Bei einem Sonnenkollektor aus dachziegelartig auf Dachlatten (3) verlegten Dachelementen (1, 2), die in Fallinie durchgehende Profilrinnen (6) für ein Wärmeträgermedium bilden, sind die Böden (8) der Profilrinnen (6) zur Bildung des Rinnenabschlusses (7) hochgezogen und gehen in einen ebenen Abschnitt (9) über, zwischen dem und den Sparren (5) eine Sammelleitung vorgesehen ist, die über dichtend in Ablauföffnungen (16) im hochgezogenen Rinnenboden (8) eingesetzte Rohrstutzen (15) an die Profilrinnen (6) angeschlossen wird.

FIG.1

EP 0 321 441 A1

**Beschreibung**

## Sonnenkollektor

Die Erfindung bezieht sich auf einen Sonnenkollektor aus Dachelementen mit Rinnenprofil, die dachziegelartig auf von Sparren getragenen Dachlatten verlegbar sind und in Falllinie durchgehende Profilrinnen für ein Wärmeträgermedium bilden, wobei die für den Endbereich der Profilrinnen vorgesehenen Dachelemente für jede Profilrinne einen Rinnenabschluß mit einer gesonderten Ablaufleitung aufweisen, die an eine wenigstens mehreren Profilrinnen gemeinsame Sammelleitung anschließbar ist.

Sonnenkollektoren aus Dachelementen, die dachziegelartig auf Dachlatten verlegt werden und in Falllinie durchgehende Profilrinnen für ein Wärmeträgermedium, insbesondere Wasser, bilden, können in einfacher Weise mit üblichen Dacheindekkungen kombiniert werden, so daß keine gesonderten Dachaufbauten nötig werden und die Größe des Sonnenkollektors jeweils über die gewählte Anzahl an Dachelementen den gegebenen Verhältnissen angepaßt werden kann, und zwar mit der Möglichkeit, die Größe des Sonnenkollektors auch nachträglich zu verändern. Schwierigkeiten ergeben sich bei diesen Sonnenkollektoren jedoch im Bereich der Ableitung des Wärmeträgermediums, das während des Durchfließens der Profilrinnen erwärmt wird, weil einerseits ein wasserdichter Anschluß an ein weiterführendes Leitungssystem und anderseits ein Ausgleich von nicht zu vermeidenden Wärmedehnungen zu fordern sind. Münden die Profilrinnen in einer quer zu den Profilrinnen verlaufenden Sammelleitung, die aus einzelnen je einem Dachelement der untersten Dachelementreihe des Sonnenkollektors zugeordneten Leitungsabschnitten zusammengesetzt ist (AT-PS 377 303), so muß für eine entsprechende Dichtung zwischen den axial aneinander stoßenden Leitungsabschnitten gesorgt werden, was aufgrund der sonst anzustrebenden geringen Wandstärke dieser Leitungsabschnitte zu Problemen führt. Werden bei einer anderen bekannten Konstruktion (AT-PS 368 275) die Profilrinnen durch eine eingesetzte Wand abgeschlossen und an den Rinnenböden im Bereich vor diesem Rinnenabschluß Ablaufleitungen angeschweißt, so ergibt sich zwar der Vorteil, daß die Ablaufleitungen innerhalb des Daches an eine gemeinsame Sammelleitung angeschlossen werden können, was die Möglichkeit eröffnet, den Sonnenkollektor auch in Falllinie in eine übliche Dacheindeckung übergehen zu lassen, doch hat sich in der Praxis herausgestellt, daß im Bereich der eingeschweißten Rinnenabschlüsse und der angeschweißten Ablaufleitungen eine erhöhte Korrosionsanfälligkeit mit der Gefahr eines Leckwerdens des Daches auftritt. Außerdem ist mit vergleichsweise großen Zwangskräften zufolge von Wärmedehnungen zu rechnen. Als weiterer Nachteil muß der Umstand angesehen werden, daß die unterhalb des Daches verlaufende Sammelleitung in besonderer Weise befestigt werden muß und einen allfälligen Dachausbau stört, wozu noch kommt, daß für Wartungsarbeiten die Anschlüsse nicht von außen zugänglich sind.

Der Erfindung liegt somit die Aufgabe zugrunde, diese Mängel zu vermeiden und einen Sonnenkollektor der eingangs geschilderten Art so zu verbessern, daß ein einfacher Ausgleich der Wärmedehnungen sichergestellt wird, eine Korrosionsgefahr im Ablaufbereich des Wärmeträgermediums ausgeschlossen werden kann und ein Leitungsverlauf erhalten wird, der weder eine besondere Halterung für die Sammelleitung erfordert noch eine Beeinträchtigung eines Dachausbaues mit sich bringt. Außerdem soll der Anschluß der Profilrinnen an die weiterführenden Leitungen auch nach der Installation des Sonnenkollektors von außen zugänglich bleiben.

Die Erfindung löst die gestellte Aufgabe dadurch, daß die Böden der Profilrinnen zur Bildung des Rinnenabschlusses hochgezogen sind und in einen zumindest im wesentlichen unprofilierten Abschnitt der Dachelemente im Endbereich der Profilrinnen übergehen, daß die aus einzelnen axial gegeneinander verschiebbaren Leitungsrohren zusammengesetzte Sammelleitung zwischen den unprofilierten Dachelementabschnitten und den Sparren verläuft und daß die Aublaufleitungen aus je einem Rohrstutzen bestehen, der dichtend in eine Ablauföffnung im hochgezogenen Rinnenboden eingesetzt ist und durch eine Durchtrittsöffnung in die Sammelleitung ragt.

Da der Rinnenabschluß durch den hochgezogenen Boden der jeweiligen Profilrinne von dem entsprechend geformten Dachelement selbst gebildet und die Verbindung zwischen den Profilrinnen und der quer dazu verlaufenden Sammelleitung durch dichtend in die Ablauföffnungen der Rinnenböden eingesetzte Rohrstutzen hergestellt wird, entfallen alle korrosionsgefährdeten Verbindungsbereiche. Trotzdem ist für einen wasserdichten Anschluß gesorgt, und zwar durch die gesonderten Rohrstutzen, die mit einer bewährten Technik dicht in die Ablauföffnungen eingesetzt werden können. Eine zusätzliche Befestigung dieser Rohrstutzen ist nicht erforderlich, die ja nicht nur in den Rinnenabschluß eingesetzt werden, sondern auch durch entsprechende Durchtrittsöffnungen in die Sammelleitung ragen. Die auftretenden Wärmedehnungen können einerseits über die weder mit den Profilrinnen noch mit der Sammelleitung starr verbundenen Rohrstutzen und anderseits über die gegeneinander verschiebbaren Leitungsrohre aufgenommen werden, die zu der Sammelleitung zusammengesetzt sind. Dabei können hinsichtlich der gegeneinander verschiebbaren Leitungsrohre beispielsweise auf dem Gebiet der Abwasserleitung bewährte Muffenverbindungen erfolgreich ein gesetzt werden.

Der im Anschluß an die Rinnenabschlüsse vorgesehene, unprofilierte Abschnitt der Dachelemente im Endbereich der Profilrinnen bietet darüber hinaus die Möglichkeit, die Sammelleitung zwischen diesen unprofilierten Dachelementabschnitten und den Sparren anzuordnen, was besondere Halterungen für die Sammelleitung erübrigt, weil die Sammelleitung ja auf den Sparren aufliegt und lediglich gegen eine Querverschiebung gesichert werden muß. Der Abstand der auf den Dachlatten aufliegenden Dachelemente von den Sparren bzw. von einer die Sparren abdeckenden Verschalung wird durch die Stärke der Dachlatten bestimmt und reicht daher für die Verlegung einer Sammelleitung nicht aus, zwischen der und den Profilrinnen noch Ablaufleitungen angeordnet werden müssen. Durch den Wegfall der Profilierung der Dachelemente im Anschlußbereich an die Profilrinnen wird jedoch ein um die Rinnentiefe vergrößerter Zwischenraum zwischen den unprofilierten Dachelementabschnitten und den Sparren erhalten, so daß die Sammelleitung zusammen mit den Anschlüssen an die Rinnenprofile in diesem Zwischenraum verlegt werden kann. Diese Lage der Sammelleitung gegenüber den Profilrinnen erfordert allerdings eine Anordnung der Ablauföffnungen im Bereich des hochgezogenen Rinnenbodens, der ja der Sammelleitung zugekehrt ist, wobei bei üblichen Dachneigungen der zusätzliche Vorteil erzielt wird, daß die Ablauföffnung im tiefsten Bereich des Rinnenabschlusses zu liegen kommt.

Die Anordnung der Sammelleitung zwischen den Sparren und den Dachelementen bildet die einfache Voraussetzung für die Zugänglichkeit zu der Sammelleitung von außen, weil ja lediglich die entsprechenden Dachelemente abgehoben werden müssen. Das Abheben der Dachelemente bietet trotz der Verbindung zwischen den Profilrinnen und der Sammelleitung keine Schwierigkeiten, weil diese Verbindung aus lediglich eingesteckten Rohrstutzen besteht. Daß eine Verlegung der Sammelleitung zwischen den Dachelementen und den Sparren jede Beeinträchtigung eines Dachausbaues ausschließt, braucht wohl nicht näher erläutert zu werden. Der Dachausbau kann somit unabhängig von der Anordnung eines Sonnenkollektors geplant und ausgeführt werden.

Die Wasserdichtheit des Anschlusses der Profilrinnen an die Sammelleitung hängt vor allem von dem dichten Einsatz der Rohrstutzen in die Ablauföffnungen der Profilrinnen ab. Um ausreichende Dichtflächen für handelsübliche Dichtungen zu schaffen, können die Ablauföffnungen zum Einsetzen der Rohrstutzen jeweils innerhalb eines ebenen Wandbereiches des hochgezogenen Rinnenbodens vorgesehen sein, so daß sich bewährte Flanschdichtungen ergeben.

Werden zur Herstellung der Dachelemente verzinkte, kunststoffbeschichtete Bleche verwendet, so können die Dachelemente in einem Arbeitsgang durch ein tiefziehendes Pressen geformt werden. Besonders einfache Formwerkzeuge werden dabei dann möglich, wenn der hochgezogene Boden der Profilrinnen nach einer Kugelkalotte geformt wird, weil in diesem Fall kugelförmige Stempel vorgesehen werden können. Die Kugelform des hochgezogenen Rinnenbodens bringt außerdem günstige Strömungsverhältnisse für das ablaufende Wärmeträgermedium mit sich, wobei ausreichend große Dichtflächen für die Verbindung mit dem Rohrstutzen der Ablaufleitungen zur Verfügung stehen.

Sollten größere Dichtflächen erwünscht sein, so kann der Kugeldurchmesser der Kugelkalotte größer als der Durchmesser eines Rinnenprofilquerschnittes gewählt werden. Die sich dabei ergebende größere Tiefe im Bereich des Rinnenabschlusses ist für die ordnungsgemäße Ableitung des Wärmeträgermediums ohne besonderen Einfluß.

Um zu verhindern, daß bei einer Beschädigung Leckflüssigkeit in das Dachinnere gelangt, kann die Sammelleitung in einer oberhalb der Sparren vorgesehenen Auffangrinne verlegt werden, über die allenfalls austretende Leckflüssigkeit abgeführt werden kann.

Es braucht wohl nicht besonders hervorgehoben zu werden, daß die Dachelemente auch im Bereich der Rinnenabschlüsse in bekannter Weise mit einer transparenten Abdeckung versehen werden können. Für die Befestigung solcher Abdeckungen empfiehlt sich eine Halterungsschiene, die im Bereich des unprofilierten Dachelementabschnittes oder im Bereich einer gegebenenfalls nachfolgenden Profilierung entlang des unteren Randes des Dachelementes angeordnet wird, so daß sich die in diese Schiene eingesetzte Abdeckung unter einem Wärmeeinfluß frei ausdehnen kann, ohne die Funktion dieser Abdeckung oder das Erscheinungsbild des Dachelementes im Dachverband zu beeinträchtigen.

In der Zeichnung ist der Erfindungsgegenstand beispielsweise dargestellt. Es zeigen

Fig. 1 einen erfindungsgemäßen Sonnenkollektor ausschnittsweise in einem Längsschnitt,

Fig. 2 einen Längsschnitt durch ein Dachelement im Bereich eines Rinnenabschlusses in einem größeren Maßstab,

Fig. 3 einen Schnitt nach der Linie III-III der Fig. 2 und

Fig. 4 eine Draufsicht auf ein Dachelement nach Fig. 2 ausschnittsweise in einem kleineren Maßstab.

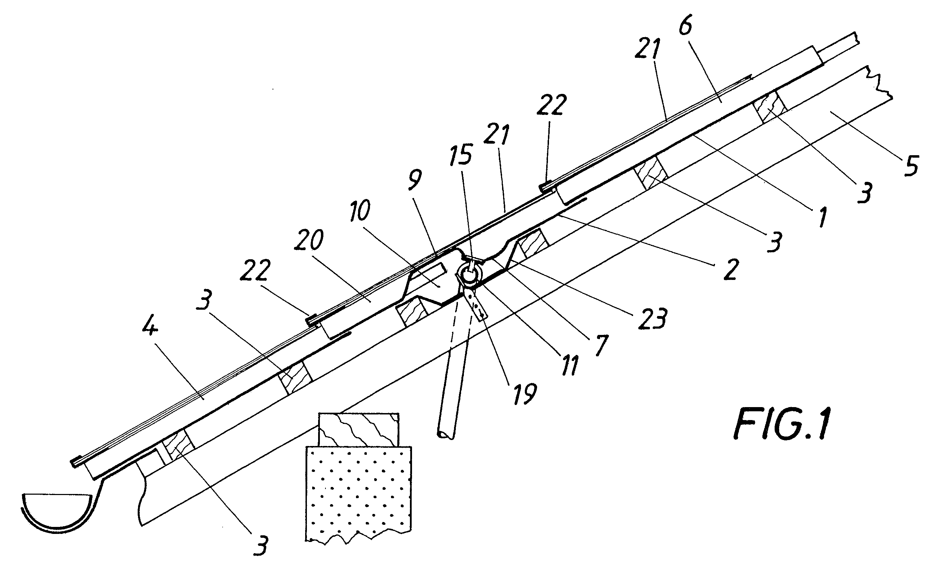

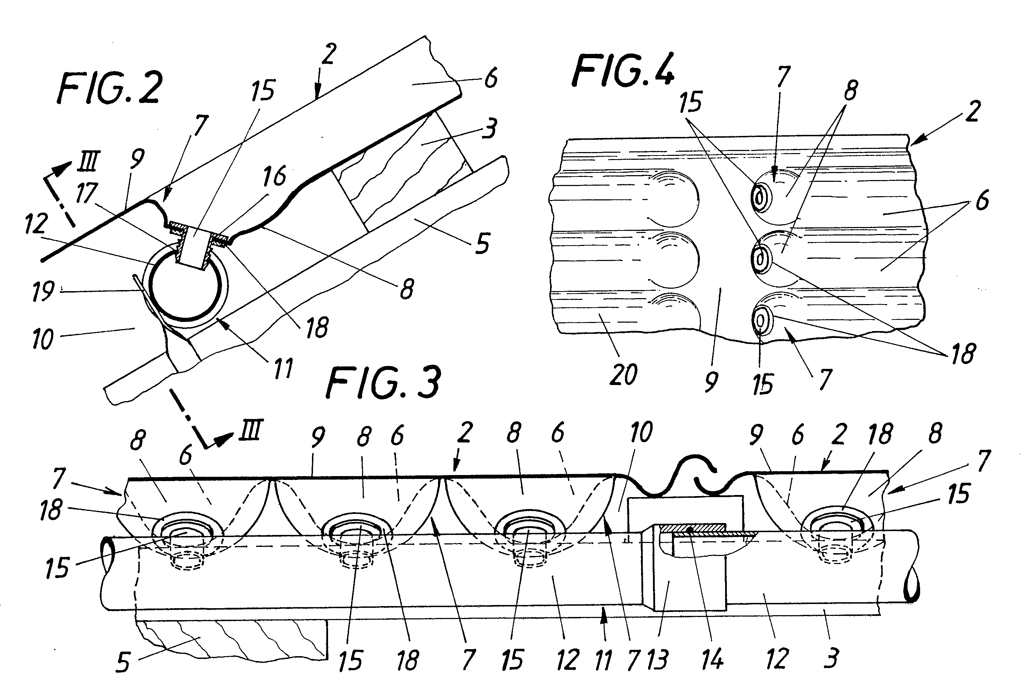

Wie dem Ausführungsbeispiel nach Fig. 1 zu entnehmen ist, ist der Sonnenkollektor dachziegelartig aus einzelnen Dachelementen 1 und 2 aufgebaut, die auf Dachlatten 3 verlegt sind und zusammen mit anderen Dachelementen 4 die Dacheindeckung bilden. Die Dachlatten 3 werden von Sparren 5 getragen, wobei auf den Sparren 5 eine Verschalung vorgesehen sein kann. Zumindest die Dachelemente 1 und 2 weisen ein Rinnenprofil auf, wobei sich in Fallinie durchgehende Profilrinnen 6 ergeben. Die Dachelemente 2 bilden dabei einen Rinnenabschluß 7 durch einen hochgezogenen Rinnenboden 8, der im Anschluß an die Profilrinnen 6 in einen ebenen Abschnitt 9 der Dachelemente 2 übergeht. Zwischen diesem profillosen, ebenen Abschnitt 9 der Dachelemente 2 und den Sparren 5 wird ein die Stärke der Dachlatten 3 übersteigender Zwischenraum 10 geschaffen, der ausreichend Platz für die Verlegung einer Sammelleitung 11 bietet. Diese Sammelleitung 11 ist aus einzelnen Leitungsrohren 12 zusammengesetzt, die jeweils eine Aufnahmemuffe 13 bilden, in die das anschließende Leitungsrohr 12 axial verschiebbar eingreift, wie dies in Fig. 3 angedeutet ist. Die Abdichtung zwischen den Leitungsrohren 12 erfolgt in herkömmlicher Art mit Hilfe einer Ringdichtung 14.

Die Sammelleitung 11 für das über die Profilrinnen 6 abfließende Wärmeträgermedium ist über Rohrstutzen 15 mit den einzelnen Rinnenabschlüssen 7 verbunden. Zu diesem Zweck sind die Rohrstutzen 15 in Ablauföffnungen 16 im hochgezogenen Rinnenboden 8 eingesetzt und ragen durch Durchtrittsöffnungen 17 in die Sammelleitung 11, wie dies insbesondere der Fig. 2 zu entnehmen ist. Die Ablauföffnungen 16 in den hochgezogenen Rinnenböden 8 sind jeweils in einem ebenen Wandbereich 18 des hochgezogenen Rinnenbodens 8 vorgesehen, so daß sich ausreichende Dichtflächen zwischen dem Rinnenabschluß 7 und dem zugehörigen Rohrstutzen 15 ergeben. Durch diese Maßnahme kann in einfacher Weise eine Flanschdichtung erhalten werden, die den gestellten Anforderungen vorteilhaft entspricht.

Die auf den Sparren 5 aufliegende Sammelleitung 11 wird gegenüber einer Querverschiebung durch an den Sparren 5 befestigte Finger 19 festgehalten, wobei sich durch die in die Sammelleitung ragenden Rohrstutzen 15 eine zusätzliche Halterung ergibt. Wegen der ausschließlich vorgesehenen Steckverbindungen wird ein einfacher Dehnungsausgleich bei Wär mebelastungen ermöglicht. Darüber hinaus wird durch die Steckverbindungen eine vorteilhafte Zugänglichkeit zu der Sammelleitung 11 sichergestellt, weil zu diesem Zweck lediglich die entsprechenden Dachelemente 2 von den Dachlatten 3 abgehoben werden müssen.

Gemäß den Fig. 2 bis 4 weist der hochgezogene Rinnenboden 8 die Form einer Kugelkalotte auf, was eine einfache Herstellung der Dachelemente aus verzinktem, kunststoffbeschichtetem Blech erlaubt, und zwar durch ein tiefziehendes Pressen mit einem entsprechend geformten Preßstempel. Der Durchmesser der Kugelkalotte ist dabei größer als der Durchmesser eines Rinnenprofilquerschnittes gewählt, um ausreichend Platz für den ebenen Wandbereich 18 des hochgezogenen Rinnenbodens 8 zu schaffen. was eine wesentliche Voraussetzung für eine einfache und wirksame Abdichtung zwischen dem Rohrstutzen 15 und dem Rinnenabschluß 7 darstellt.

Wie sich den Fig. 1 und 4 entnehmen läßt, können die Dachelemente 2 im Anschluß an den ebenen Abschnitt 9 wieder in einen rinnenartig profilierten Bereich 20 übergehen, um mit den entsprechend profilierten Dachelementen 4 die Dacheindeckung einheitlich fortzusetzen. Eine solche Ausbildungsform ist allerdings nicht zwingend erforderlich.

Die Dachelemente 1 und 2 sind üblicherweise mit einer transparenten Abdeckung 21 versehen. Diese Abdeckungen 21 können in Schienen 22 im unteren Randbereich der Dachelemente gehalten sein, so daß diese Abdeckungen 21, die im oberen Randbereich jeweils von den anschließenden Dachelementen übergriffen werden, sich frei ausdehnen können, ohne das optische Erscheinungsbild der Dacheindeckung bei Wärmedehnungen zu beeinträchtigen.

Obwohl der dargestellte Anschluß der Sammelleitung 11 an die einzelnen Profilrinnen 6 trotz der Steckverbindungen flüssig keitsdicht ist, könnte in einem Beschädigungsfall Wärmeträgermedium im Anschlußbereich austreten und nach innen abfließen. Zur Vermeidung eines solchen unkontrollierten Abfließens von Wasser kann die Sammelleitung 11 in einer Auffangrinne 23 verlegt werden, die sich zwischen den anschliessenden Dachlatten 3 erstreckt und für eine Ableitung der Leckflüssigkeit sorgt.

## Patentansprüche

1. Sonnenkollektor aus Dachelementen mit Rinnenprofilen, die dachziegelartig auf von Sparren getragenen Dachlatten verlegbar sind und in Fallinie durchgehende Profilrinnen für ein Wärmeträgermedium bilden, wobei die für den Endbereich der Profilrinnen vorgesehenen Dachelemente für jede Profilrinne einen Rinnenabschluß mit einer gesonderten Ablaufleitung aufweisen, die an eine wenigstens mehreren Profilrinnen gemeinsame Sammelleitung anschließbar ist, dadurch gekennzeichnet, daß die Böden (8) der Profilrinnen (6) zur Bildung des Rinnenabschlusses (7) hochgezogen sind und in einen zumindest im wesentlichen unprofilierten Abschnitt (9) der Dachelemente (2) im Endbereich der Profilrinnen (6) übergehen, daß die aus einzelnen axial gegeneinander verschiebbaren Leitungsrohren (12) zusammengesetzte Sammelleitung (11) zwischen den unprofilierten Dachelementabschnitten (9) und den Sparren (5) verläuft und daß die Ablaufleitungen aus je einem Rohrstutzen (15) bestehen, der dichtend in eine Ablauföffnung (16) im hochgezogenen Rinnenboden (8) eingesetzt ist und durch eine Durchtrittsöffnung (17) in die Sammelleitung (11) ragt.

2. Sonnenkollektor nach Anspruch 1, dadurch gekennzeichnet, daß die Ablauföffnungen (16) zum Einsetzen der Rohrstutzen (15) jeweils innerhalb eines ebenen Wandbereiches (18) des hochgezogenen Rinnenbodens (8) vorgesehen sind.

3. Sonnenkollektor nach Anspruch 1 oder 2, dadurch gekennzeichnet, daß der zum Rinnenabschluß (7) hochgezogene Boden (8) der Profilrinnen (6) nach einer Kugelkalotte geformt ist.

4. Sonnenkollektor nach Anspruch 3, dadurch gekennzeichnet, daß der Kugeldurchmesser der Kugelkalotte größer als der Durchmesser eines Rinnenprofilquerschnittes ist.

5. Sonnenkollektor nach einem der Ansprüche 1 bis 4, dadurch gekennzeichnet, daß die Sammelleitung (11) in einer oberhalb der Sparren (5) vorgesehenen Auffangrinne (23) verlegt ist.

FIG.1

FIG.2

FIG.4

FIG.3

EP 0 321 441 A1

Europäisches
Patentamt

**EUROPÄISCHER RECHERCHENBERICHT**

Nummer der Anmeldung

EP 88 89 0311

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 473 066 (CLARK)<br>* Spalte 3, Zeile 61 - Spalte 4, Zeile 13; Spalte 4, Zeile 51 - Spalte 5, Zeile 33; Spalte 8, Zeile 55 - Spalte 9, Zeile 34; Spalte 10, Zeilen 27-47; Spalte 11, Zeilen 41-55; Spalte 13, Zeilen 1-39; Spalte 16, Zeilen 29-65; Figuren 1,2,5,6,11,16 *<br>--- | 1 | F 24 J 2/04<br>E 04 D 13/18 |
| Y | AU-B- 521 223 (DOWLING PLASTICS PTY., LTD)<br>* Seite 3, Zeile 10 - Seite 30, Zeile 1; Figuren 1-4 *<br>--- | 1 | |
| A | AU-B-5 213 223<br>--- | 2-4 | |
| A | EP-A-0 006 585 (HEUSER)<br>* Seite 6, Zeile 6 - Seite 7, Zeile 15; Seite 8, Zeile 24 - Seite 9, Zeile 10; Figuren 1,2 *<br>--- | 1 | |
| A | US-A-4 405 396 (BRILL-EDWARDS)<br>* Spalte 3, Zeilen 9-36; Spalte 5, Zeilen 14-20,48-58; Figuren 1-3,9,10 *<br>--- | 1-3 | **RECHERCHIERTE SACHGEBIETE (Int. Cl.4)**<br><br>F 24 J |
| A | US-A-4 146 011 (THOMASSEN et al.)<br>* Spalte 1, Zeilen 25-50; Figuren 1-5 *<br>--- | 1 | |
| A | FR-A-2 466 582 (PENIGOT)<br>* Seite 5, Zeilen 7-31; Seite 9, Zeilen 25-36; Seite 10, Zeile 28 - Seite 11, Zeile 1; Figuren 1-6 *<br>--- | 1 | |
| A | US-A-4 416 265 (WALLACE)<br>* Spalte 4, Zeilen 34-63; Spalte 5, Zeilen 29-51; Figuren 1-5 *<br>---       -/- | 1,5 | |

Der vorliegende Recherchenbericht wurde für alle Patentansprüche erstellt

| Recherchenort | Abschlußdatum der Recherche | Prüfer |
|---|---|---|
| DEN HAAG | 13-03-1989 | BELTZUNG F.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 086 912  (FREEMAN)<br>* Spalte 2, Zeilen 3-47; Figuren 1,2 *<br>----- | 1 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 13-03-1989 | BELTZUNG F.C. |